(19) Europäisches Patentamt
European Patent Office
Office européen des brevets

(11) EP 4 768 363 A1

(12) **EUROPEAN PATENT APPLICATION**

(43) Date of publication:
**01.07.2026 Bulletin 2026/27**

(21) Application number: **25226645.7**

(22) Date of filing: **23.12.2025**

(51) International Patent Classification (IPC):
**B62D 6/00** (2006.01)    **A01B 69/04** (2006.01)
**B62D 15/02** (2006.01)

(52) Cooperative Patent Classification (CPC):
**B62D 6/002; A01B 69/008; B62D 15/025**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.12.2024 JP 2024231929**

(71) Applicant: **Kubota Corporation
Osaka-shi, Osaka 530-0011 (JP)**

(72) Inventors:
• **OKUYAMA, Yuji
Sakai-shi, Osaka, 590-0908 (JP)**
• **SUYAMA, Tomoya
Sakai-shi, Osaka, 590-0908 (JP)**
• **SUEFUJI, Masayoshi
Sakai-shi, Osaka, 590-0908 (JP)**

(74) Representative: **Müller-Boré & Partner
Patentanwälte PartG mbB
Friedenheimer Brücke 21
80639 München (DE)**

(54) **CONTROLLERS AND CONTROL METHODS FOR EXERTION OF VEHICLE STEERING CONTROL**

(57)    A controller configured or programmed to control steering of a vehicle includes one or more processors, and one or more memories storing a computer program to be executed by the one or more processors to perform operations including obtaining sensor data from one or more sensors provided on the vehicle for use in determining a curvature of a route along which the vehicle is traveling, determining the curvature based on the sensor data, and correcting a steering angle of a steered wheel of the vehicle based on the curvature.

*FIG. 1*

**Description**

CROSS REFERENCE TO RELATED APPLICATIONS

This application claims the benefit of priority to Japanese Patent Application No. 2024-231929 filed on December 27, 2024. The entire contents of this application are hereby incorporated herein by reference.

BACKGROUND OF THE INVENTION

1. Field of the Invention

The present disclosure relates to controllers and control methods for performing vehicle steering control.

2. Description of the Related Art

Research and development are underway to automate work vehicles such as agricultural tractors. For example, vehicles that travel by automatic steering, utilizing positioning devices such as GNSS (Global Navigation Satellite System) capable of precise positioning, have been put into practical use. Vehicles that automatically control speed in addition to automatic steering have also been put into practical use.

U.S. Patent No. 11,572,074 discloses an example of the system of controlling an off-road vehicle (agricultural vehicle, construction vehicle, etc.) that performs self-traveling. The system disclosed in U.S. Patent No. 11,572,074 has the function of estimating vehicle tire parameters (cornering stiffness, tire type, etc.) in real time. This system estimates the tire parameters based on the difference between the predicted vehicle position that is predicted based on the vehicle's motion characteristics and the measured position of the vehicle.

SUMMARY OF THE INVENTION

A vehicle traveling by automatic steering uses various sensors to estimate its own position and orientation while traveling along a predetermined target route. To allow the vehicle to travel along the target route, it is required to precisely adjust the steering angle of the steered wheels (e.g., front wheels) so as to match the curvature of the target route. However, since the theoretical vehicle movement and the actual vehicle movement generally have differences, it is important to appropriately correct the steering angle based on the differences.

Example embodiments of the present invention provide vehicles each capable of correcting a steering angle in real time based on information obtained during normal traveling without requiring any special traveling to determine correction parameters for steering angle correction, and a controllers and control methods for such vehicles.

The present disclosure provides the solutions described in the following items.

[Item 1]

A controller for controlling steering of a vehicle, the controller including one or more processors, and one or more memories storing a computer program to be executed by the one or more processors, wherein the one or more processors is/are configured or programmed to execute the computer program to perform operations including obtaining sensor data from one or more sensors provided on the vehicle for use in determining a curvature of a route along which the vehicle is traveling, determining the curvature based on the sensor data, and correcting a steering angle of a steered wheel of the vehicle based on the curvature.

[Item 2]

The controller of Item 1, wherein the one or more processors is/are configured or programmed to correct the steering angle based on the curvature and a wheelbase of the vehicle.

[Item 3]

The controller of Item 1 or 2, wherein the one or more sensors include a vehicle speed sensor to measure a traveling speed of the vehicle, and an angular velocity sensor to measure an angular velocity about a yaw axis of the vehicle, wherein the one or more processors is/are configured or programmed to determine the curvature based on the traveling speed and the angular velocity.

[Item 4]

The controller of Item 3, wherein the one or more processors is/are configured or programmed to determine the curvature based on a relationship $\kappa = \omega/v$ where v is the traveling speed, $\omega$ is the angular velocity, and $\kappa$ is the curvature.

[Item 5]

The controller of Item 4, wherein the one or more processors is/are configured or programmed to determine a first error coefficient $\alpha$ and a second error coefficient $\beta$ based on a relationship $\kappa = \tan(\delta \times \beta + \alpha)/L$ ... (Equation 1), where $\delta$ is the steering angle of the vehicle before correction, L is the wheelbase, $\alpha$ is the first error coefficient, and $\beta$ is the second error coefficient, and the one or more processors is/are configured or programmed to correct the steering angle based on the first error coefficient $\alpha$ and the second error coefficient $\beta$.

[Item 6]

The controller of Item 5, wherein the one or more sensors include a steering angle sensor to measure the steering angle of the vehicle, the one or more processors is/are configured or programmed to determine the curvature $\kappa$ based on the traveling speed v and the angular velocity $\omega$ during a period in which the vehicle is traveling while an absolute value of the measured steering angle is smaller than a first threshold, and the one or more processors is/are configured or programmed to determine the first error coefficient $\alpha$ based on a relationship $\kappa = \tan(\alpha)/L$ obtained by substituting $\delta = 0$ into Equation 1.

[Item 7]

The controller of Item 6, wherein the one or more processors is/are configured or programmed to determine the second error coefficient $\beta$ based on the determined first error coefficient $\alpha$, the curvature $\kappa$ determined based on the traveling speed v and the angular velocity $\omega$ during a period in which the vehicle is traveling while the absolute value of the steering angle is greater than a second threshold, and Equation 1.

[Item 8]

The controller of any one of Items 5 to 7, wherein the one or more processors is/are configured or programmed to continuously update the first error coefficient $\alpha$ and the second error coefficient $\beta$ while the vehicle is traveling and correct the steering angle based on the updated first error coefficient $\alpha$ and the updated second error coefficient $\beta$.

[Item 9]

The controller of any one of Items 1 to 8, wherein the one or more processors is/are configured or programmed to select a portion of the sensor data obtained while the vehicle is traveling, to be used in determining the curvature, based on contents of the sensor data and/or a travel condition of the vehicle.

[Item 10]

The controller of any one of Items 1 to 9, wherein the vehicle is capable of operating in an automatic steering mode, and the one or more processors is/are configured or programmed to determine a steering command angle based on a target route and a position of the vehicle, determine a steering angle correction parameter based on the curvature, correct the steering command angle based on the steering angle correction parameter, and control steering of the vehicle based on the corrected steering command angle.

[Item 11]

The controller of any one of Items 1 to 9, wherein the vehicle is capable of operating in an automatic steering mode, and in the automatic steering mode, the one or more processors is/are configured or programmed to obtain information indicative of a measured position of the vehicle from a positioning device provided on the vehicle, retrieve information indicative of a target route of the vehicle from a storage, determine a steering command angle based on the measured position and the target route, determine a steering angle correction parameter based on the curvature, correct the steering command angle based on the steering angle correction parameter, and control steering of the vehicle based on the corrected steering command angle.

[Item 12]

The controller of any one of Items 1 to 11, wherein the vehicle is an agricultural tractor.

[Item 13]

A vehicle including the controller as set forth in any one of Items 1 to 12, the one or more sensors, a drivetrain including a steered wheel, and an actuator to drive the steered wheel based on an instruction from the controller.

[Item 14]

A method executed by one or more computers to control steering of a vehicle, the method including obtaining sensor data from one or more sensors provided on the vehicle for use in determining a curvature of a route along which the vehicle is traveling, determining the curvature based on the sensor data, and correcting a steering angle of a steered wheel of the vehicle based on the curvature.

[Item 15]

A computer program product executable by one or more computers to control steering of a vehicle, the computer program causing the one or more computers to obtain sensor data from one or more sensors provided on the vehicle for use in determining a curvature of a route along which the vehicle is traveling, determine the curvature based on the sensor data, and correct a steering angle of the vehicle based on the curvature.

General or specific example embodiments of the present disclosure may be realized by an apparatus, system, method, integrated circuit, computer program, or computer readable non-transitory storage medium, or any combination thereof. The computer readable storage medium may include a volatile storage medium or a nonvolatile storage medium. The apparatus may include a plurality of apparatuses. Where the apparatus includes two or more apparatuses, the two or more apparatuses may be arranged within a single device or may be arranged separately within two or more separate devices.

According to an example embodiment of the present invention, it is possible to correct the steering angle in real time based on information obtained during normal traveling without requiring any special traveling to determine the correction parameters for steering angle correction.

The above and other elements, features, steps, characteristics and advantages of the present invention will become more apparent from the following detailed description of the example embodiments with reference to the attached drawings.

BRIEF DESCRIPTION OF THE DRAWINGS

FIG. **1** is a block diagram showing a general configuration of a vehicle according to an example embodiment of the present invention.

FIG. **2** is a flowchart showing an example of an operation performed by a processor of a controller.

FIG. **3A** schematically shows the steering angle offset error that can occur when a vehicle is traveling straight.

FIG. **3B** schematically shows the steering angle scale factor error that can occur when a vehicle is making a turn.

FIG. **4** shows an example of the vehicle geometry in a front-wheel steering vehicle.

FIG. **5** is a flowchart showing an example of the method of determining the correction parameters by the processor of the controller.

FIG. **6** is a perspective view showing an example of the appearance of a work vehicle.

FIG. **7** is a side view schematically showing an example of the work vehicle and an implement linked to the work vehicle.

FIG. **8** is a block diagram showing an example schematic configuration of the work vehicle and an implement.

FIG. **9** is a conceptual diagram showing an example of the work vehicle to perform positioning using RTK-GNSS.

FIG. **10** is a schematic diagram showing an example of an operation terminal and operation switches provided inside the cabin.

FIG. **11** is a block diagram showing an example hardware configuration of an ECU (controller).

FIG. **12A** is a diagram showing an example of how the work vehicle travels in the automatic steering mode.

FIG. **12B** is a diagram showing another example of how the work vehicle travels in the automatic steering mode.

FIG. **12C** is a diagram showing yet another example of how the work vehicle travels in the automatic steering mode.

FIG. **13** is a diagram schematically showing an example of a target route for the work vehicle traveling in a field by automatic steering.

FIG. **14** is a flowchart showing an example of an operation performed by a controller during automatic steering.

FIG. **15A** is a diagram showing an example of the work vehicle traveling along a target route.

FIG. **15B** is a diagram showing an example of the work vehicle located at a position shifted to the right from the target route.

FIG. **15C** is a diagram showing an example of a work vehicle located at a position shifted to the left from the target route.

FIG. **15D** is a diagram showing an example of the work vehicle oriented in a direction inclined relative to the target route.

## DETAILED DESCRIPTION OF THE EXAMPLE EMBODIMENTS

Hereinafter, example embodiments of the present disclosure will be described. Note, however, that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. Note that the accompanying drawings and the following description, which are provided by the present inventors so that those skilled in the art can sufficiently understand the present disclosure, are not intended to limit the scope of the claims. In the following description, elements having identical or similar functions are denoted by identical reference numerals.

The following example embodiments are only examples, and the techniques according to the present disclosure are not limited to the following example embodiments. For example, numerical values, shapes, steps, orders of steps, layout of a display screen, etc., which are indicated in the following example embodiments are only examples, and admit of various modifications. Any one implementation may be combined with another.

In this specification, "self-driving" refers to controlling travel of a vehicle by the action of a controller, rather than through manual operations of a driver (operator). During self-driving, not only travel of the vehicle, but also the operation of work (e.g., the operation of the implement) may be controlled automatically. Travel of a vehicle via self-driving will be referred to as "self-traveling". The controller may control at least one of: steering that is required in travel of a vehicle, adjustment of the traveling speed, or beginning and ending of travel. Steering of a vehicle through the action of a controller without manual operation by a driver is referred to as "automatic steering". In the case of controlling a work vehicle having an implement attached thereto, the controller may control operations such as raising or lowering of the implement, beginning and ending of an operation of the implement, and so on. A travel based on self-driving may include not only traveling of a vehicle that goes along a predetermined route toward a destination, but also traveling of a vehicle that follows a target of tracking. A vehicle that performs self-driving may operate not only in a self-driving mode but also in a manual driving mode, where the vehicle travels through manual operations of a driver. A travel of a vehicle through manual operations of a driver is referred to as "manual traveling". The "manual operations of a driver" include not only manual operations of a driver on a vehicle but also remote operations of a driver outside a vehicle. A vehicle that performs self-driving may also travel partly based on the driver's manual operations. A portion of, or the entirety of, the controller may reside outside the vehicle. Control signals, commands, data, etc., may be communicated between the vehicle and a controller residing outside the vehicle. A vehicle that performs self-driving may travel autonomously while sensing the surrounding environment, without any person being involved in the controlling of the travel of the vehicle. A vehicle that is capable of autonomous traveling is able to travel in an unmanned manner. During an autonomous travel, operations of detecting and avoiding obstacles can be performed.

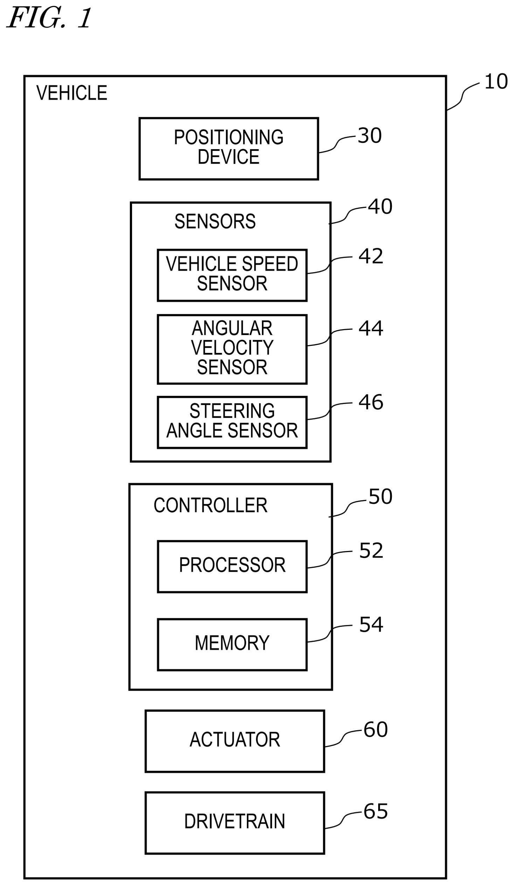

FIG. **1** is a block diagram showing a general configuration of a vehicle **10** according to an exemplary example embodiment of the present invention. The vehicle **10** can be a work vehicle for agriculture, such as an agricultural tractor. Note that the vehicle **10** is not limited to an agricultural work vehicle but may be any other type of vehicle, such as a construction vehicle, a truck, or a passenger car.

The vehicle **10** shown in FIG. **1** includes a positioning device **30**, sensors **40**, a controller **50**, an actuator **60**, and a drivetrain **65**. The positioning device **30** measures the position of the vehicle **10** and outputs information indicative of the measured position. The sensors **40** include, for example, various sensors such as a vehicle speed sensor **42**, an angular velocity sensor **44**, and a steering angle sensor **46**. The vehicle **10** may include an inertial measurement unit (IMU) that includes the vehicle speed sensor **42** and the angular velocity sensor **44**. The controller **50** includes one or more processors **52** and one or more memories **54**. The drivetrain **65** includes various components necessary for travel, such as four wheels (i.e., two front wheels and two rear wheels) and front and rear axles, for example. The drivetrain **65** includes, for example, two front wheels as drive wheels. The actuator **60** is configured to drive the steered wheels according to instructions from the controller **50**.

The controller **50** can be configured or programmed to operate both in the automatic steering mode and the manual steering mode. The controller **50** can be configured or programmed to switch between the automatic steering mode and the manual steering mode in response to an operation by a driver, for example. In the automatic steering mode, the controller **50** is configured or programmed to control the steering of the steered wheels (e.g., the left and right front wheels) included in the drivetrain **65** via the actuator **60** such that the vehicle **10** travels along a target route based on the position of the vehicle **10** specified by the positioning device **30** and the target routes stored in a storage such as the memory **54.**

The positioning device **30** is placed inside or outside the vehicle **10.** The positioning device **30** can include, for example, a GNSS receiver. The positioning device **30** specifies the position of the vehicle **10** based on signals from a plurality of GNSS satellites and outputs time series position data. The positioning device **30** may include devices other than the GNSS receiver, such as LiDAR sensors or cameras. By matching data acquired by LiDAR sensors or cameras with a pre-prepared environment map, the position of the vehicle **10** can be estimated. The target route is a route that is set within the area where the vehicle **10** travels and is used as a target for travel. The target route can be set, for example, based on inputs by a user before automatic steering driving begins and can be stored in a storage such as the memory **54.** When the vehicle **10** is an agricultural vehicle such as a tractor, the target route can be set within a field and/or farm roads outside the field.

The controller **50** may be a computer configured or programmed to perform steering control for automatic steering. The controller **50** can be, for example, an electronic control unit (ECU) provided in the vehicle **10.** At least some of the functions of the controller **50** may be realized by a device provided outside the vehicle **10.** That is, the functions of the controller **50** may be realized by a group of multiple computers provided inside or outside the vehicle **10.**

As shown in FIG. **1,** the controller **50** includes one or more processors **52** and one or more memories **54.** FIG. 1 illustrates a single processor **52** and a single memory **54,** although a plurality of processors and/or a plurality of memories may be provided in the controller **50.** The memory **54** stores computer programs that are to be executed by the processor **52,** data that are to be referenced by the processor **52,** and data generated by the processor **52.** The processor **52** can be configured or programmed to execute operations including the steering control of the vehicle **10** by executing computer programs stored in the memory **54.**

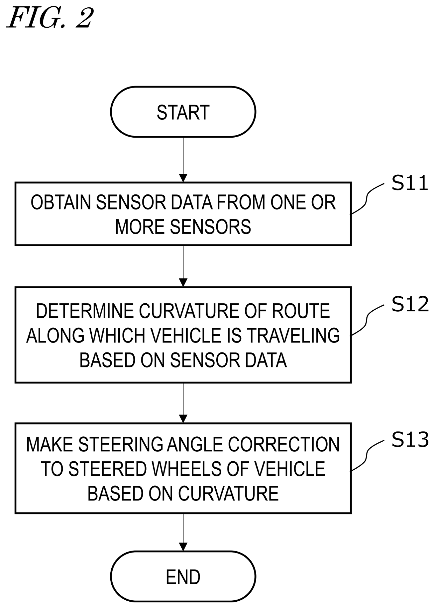

FIG. **2** is a flowchart showing an example of an operation performed by the processor **52** of the controller **50.** In the example shown in FIG. **2,** the processor **52** executes the programs stored in the memory **54,** thus executing the following operations:

- obtaining sensor data, which are to be used to determine the curvature of the route along which the vehicle **10** is traveling, from one or more sensors included in the sensors **20** installed on the vehicle **10** (Step S11);
- determining the curvature of the route along which the vehicle **10** is traveling based on the obtained sensor data (Step S12); and
- making a steering angle correction to the steered wheels of the vehicle **10** based on the determined curvature (Step S13).

"One or more sensors" can be, for example, the vehicle speed sensor **42** and the angular velocity sensor **44.** These sensors enable measurement of the traveling speed of the vehicle **10** (also referred to as "vehicle speed") and measurement of the angular velocity of the vehicle **10** about the yaw axis (also referred to as "yaw rate"). As will be described later, the processor **52** can determine the curvature of the route along which the vehicle **10** is traveling (hereinafter, also referred to as "travel curvature") based on the traveling speed measured by the vehicle speed sensor **42** and the angular velocity (yaw rate) measured by the angular velocity sensor **44.**

The processor **52** may determine the curvature using signals from sensors other than the vehicle speed sensor **42** and the angular velocity sensor **44.** For example, when the sensors **40** include an accelerometer, the processor **52** may determine the curvature based on the measurement values of the accelerometer. Alternatively, when the positioning device **30** is capable of high-precision positioning such as RTK-GNSS, the processor **52** may determine the traveling curvature of the vehicle **10** based on the change over time of the position measured by the positioning device **30.**

The "steering angle correction" is the process of correcting the instruction values for the steering angle of the steered wheels (e.g., the left and right front wheels) of the vehicle **10,** thus adjusting the steering angle such that the vehicle can travel at the target curvature. As will be described later, the processor **52** can correct the steering angle based on the curvature determined at Step S12 and the wheelbase of the vehicle **10.**

If the vehicle **10** is capable of operating in the automatic steering mode, the processor **52** can be configured or programmed to perform the following operations in the automatic steering mode:

- obtaining information indicative of the measured position of the vehicle **10** from the positioning device **30;**
- retrieving information indicative of the target route of the vehicle **10** from the storage (e.g., the memory **54);**
- determining the steering command angle based on the measured position and the target route according to a predetermined algorithm.
- obtaining the front wheel steering angle value for the vehicle **10** from the steering angle sensor **46;**

- determining the steering angle correction parameters based on the curvature determined at Step S12 and the front wheel steering angle obtained from the steering angle sensor 46;
- correcting the steering command angle based on the determined steering angle correction parameters; and
- exerting the vehicle steering control based on the corrected steering command angle.

The "steering angle correction parameters" are parameters for use in steering angle correction. The steering angle correction parameters can include, for example, error coefficients $\alpha$ and $\beta$, which will be described later, or any parameters derived from the error coefficients.

On the other hand, in manual steering mode, the steering angle correction is not made, but it is possible to perform the process of determining the steering angle correction parameters for use in the automatic steering mode. In manual steering mode, the processor 52 can be configured or programmed to perform the following operations:

- obtaining the front wheel steering angle values for the vehicle 10, which vary based on the driver's steering operation, from the steering angle sensor 46;
- determining the steering angle correction parameters based on the curvature determined at Step S12 and the front wheel steering angle obtained from the steering angle sensor 46 and storing the determined steering angle correction parameters in the storage.

Through the above operations, the controller 50 can obtain the steering angle correction parameters for optimization of the steering angle in the automatic steering mode based on the actual curvature of the route along which the vehicle 10 is traveling. This enables real-time steering angle correction during normal traveling without requiring any special traveling to determine the correction values for the steering angle correction.

As previously described, the theoretical vehicle movement and the actual vehicle movement generally have differences. For example, due to various factors such as ground irregularities, component mounting errors, sensor detection errors, etc., the curvature during travel of the vehicle 10 may deviate from the curvature calculated based on the theoretical vehicle movement. Therefore, to allow the vehicle to travel along the target route, it is necessary to appropriately determine the steering angle correction values such that the differences between the theoretical vehicle movement and the actual vehicle movement are reduced.

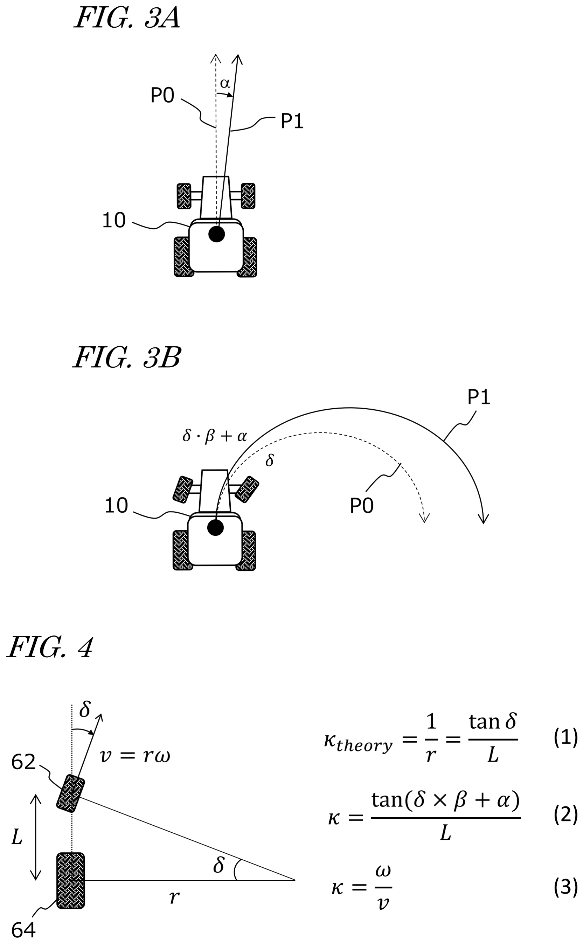

Examples of the correction values include the straight-travel correction value that is for correcting the offset error during straight travel of the vehicle and the turn correction value that is for correcting the scale factor error during turning. Hereinafter, these errors and correction values will be described with reference to FIG. 3A and FIG. 3B.

FIG. 3A schematically shows the steering angle offset error that can occur when a vehicle 10 is traveling straight. FIG. 3B schematically shows the steering angle scale factor error that can occur when a vehicle 10 is making a turn. In FIG. 3A and FIG. 3B, the target route P0 is illustrated by a dashed arrow, and the actual route P1 of the vehicle 10 is illustrated by a solid arrow. The steering angle corresponding to the target route P0 is denoted by $\delta$. The coefficient for the offset error during straight traveling (first error coefficient) is denoted by $\alpha$. The coefficient for the scale factor error during turning (second error coefficient) is denoted by $\beta$.

As shown in FIG. 3A, even if the steering command angle is set to 0 degrees ($\delta = 0$) to allow the vehicle 10 to travel straight, the actual path of the vehicle 10 may correspond to the path taken when the steering angle is $\alpha$ ($\neq 0$) due to the offset error. As shown in FIG. 3B, even if the steering command angle is set to $\delta$ to allow the vehicle 10 to make a turn along a predetermined target route P0, the actual path of the vehicle 10 may correspond to the path taken when the steering angle is $\delta \times \beta + \alpha$ due to the scale factor error and the offset error. Therefore, it is advantageous to correct the steering command angle such that the effects of these errors are eliminated. Correction to the steering command angle can be realized by specifying the coefficients $\alpha$ and $\beta$ and correcting the steering command angle, for example, from $\delta$ to $\delta' = (\delta - \alpha)/\beta$, using the specified values.

Traditionally, to address the above issues, a special mode has been implemented in vehicles, separate from the normal driving mode, to determine the correction parameters such as the coefficients $\alpha$ and $\beta$. In such a mode, a vehicle is driven to manually or automatically travel along one of several predetermined routes, such as a straight route or an arc-shaped route with a predetermined curvature, and the correction parameters are determined based on the data obtained during the travel of the vehicle. For example, a vehicle is driven to manually or automatically travel along a straight route, and the offset error coefficient $\alpha$ can be determined based on the instruction value or measurement value for the steering angle during the travel. Additionally, the vehicle is driven to travel at a predetermined steering angle, and the scale factor error coefficient $\beta$ can be determined based on the curvature of the actually traveled path measured during the travel (hereinafter, also referred to as "traveling curvature"), the steering command angle, and the previously determined coefficient $\alpha$. The operation of driving a vehicle to travel in such a special mode to determine the correction parameters can be performed, for example, by the manufacturer or dealer prior to sale of the vehicle, or by a service provider or user during maintenance, modification, or repair.

The appropriate correction parameters can vary among individual vehicles. Furthermore, it can vary even in the same individual vehicle due to deterioration over time, modifications, or repairs in the vehicle body. Therefore, it is necessary to appropriately update the correction parameters. However, the process of determining or updating the correction parameters using such special modes is troublesome and requires 10 or more minutes per instance even if performed by an experienced operator. If the operation is not appropriately performed, the correction parameters will not be updated properly and, consequently, the accuracy or precision of the steering control can deteriorate.

Thus, the present disclosure provides a method for automatically determining the correction parameters based on information obtained during usual travelling of the vehicle **10**. This enables determination of the correction parameters without performing predetermined operations that will be necessary in a conventional method with the use of the mode for acquisition of the correction parameters.

Now, a steering angle correction method according to the present example embodiment is described more specifically with reference to FIG. **4.**

FIG. 4 shows an example of the vehicle geometry in a front-wheel steering vehicle having an Ackermann-Jeantaud mechanism. FIG. **4** shows a front wheel **62** and a rear wheel **64** included in the drivetrain of the vehicle, which are on the outside during turning. Herein, r is the turning radius of the vehicle, L is the distance between the axle of the front wheel **62** and the axle of the rear wheel **64** (i.e., wheelbase), and δ is the steering angle of the front wheel **62** (i.e., steered wheel). The theoretical traveling curvature $\kappa_{theory}$ based on the vehicle geometry is calculated by the following equation (1).

Equation 1

$$\kappa_{theory} = \frac{1}{r} = \frac{\tan \delta}{L} \qquad (1)$$

In actual vehicles, due to various factors such as tire slip or mounting errors of components such as actuators or sensors, Equation (1) does not necessarily hold true. The actual traveling curvature κ of the vehicles can be expressed by Equation (2) shown below, which includes, for example, the aforementioned error coefficients α and β.

Equation 2

$$\kappa = \frac{\tan(\delta \times \beta + \alpha)}{L} \qquad (2)$$

Herein, α represents the offset error coefficient that causes a curvature error when the steering angle δ is zero (0), and β represents the scale factor error coefficient that causes a curvature error proportional to the steering angle δ. The error coefficients α and β relate to the straight-travel correction value and the turn correction value, respectively.

On the other hand, Equation (3) shown below holds between the speed of a traveling vehicle, v, the angular velocity about the yaw axis (yaw rate), ω, and the traveling curvature κ.

Equation 3

$$\kappa = \frac{\omega}{v} \qquad (3)$$

The processor **52** of the controller **50** of the present example embodiment can be configured or programmed to determine the error coefficients α and β based on the relationships of Equation (1) to Equation (3), the vehicle speed v, the angular velocity ω, and the steering angle δ while the vehicle **10** is traveling in the manual or automatic driving mode. The vehicle speed v can be measured by the vehicle speed sensor **42**. The angular velocity ω can be measured by the angular velocity sensor **44**. When the vehicle **10** is traveling under automatic steering, the steering angle δ can be the steering command angle determined by the processor **52** according to a predetermined algorithm based on the current position and orientation of the vehicle **10** and the target route. When the vehicle **10** is traveling under manual steering, the steering angle δ may be the front wheel steering angle value determined based on the driver's steering operation.

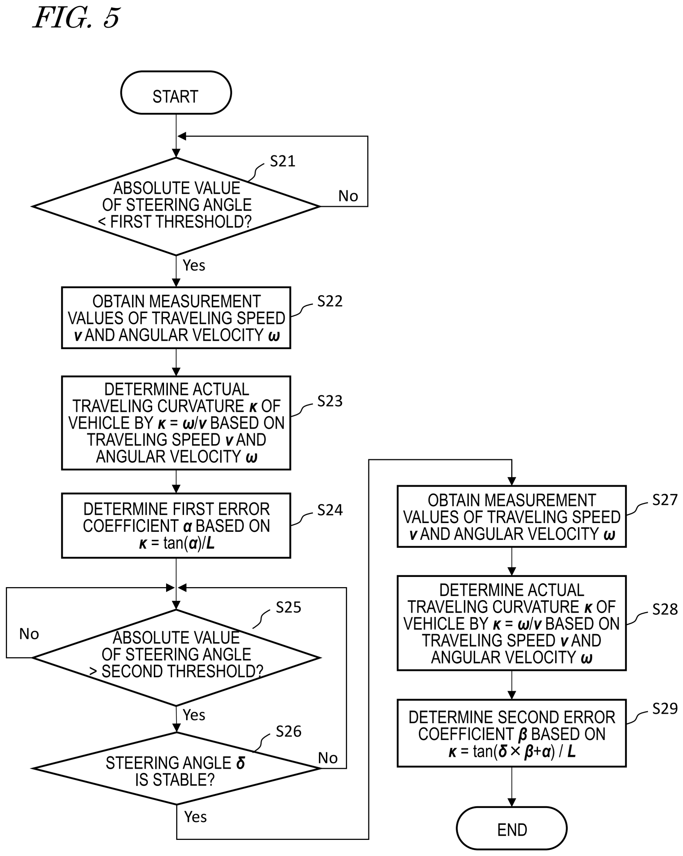

The processor **52** can determine the correction parameters (error coefficients α and β) through the process shown in FIG. **5,** for example. FIG. **5** is a flowchart showing an example of the method of determining the error coefficients α and β by the processor **52** of the controller **50**. The operation shown in FIG. **5** is performed when the vehicle **10** is traveling in the automatic or manual driving mode. The travel route of the vehicle **10** is arbitrary. In the example of FIG. **5,** the processor **52** is configured or programmed to perform the following operations.

At Step S21, the processor **52** determines whether or not the absolute value of the steering angle is smaller than the first threshold. The steering angle may be the value measured by the steering angle sensor **46** or, in the case of automatic driving, the steering command angle determined by the processor **52**. The first threshold can be set to a positive value close to zero. For example, the first threshold can be set to a value in the range of 0.01° to 1°. That is, the processor **52** determines whether or not the vehicle **10** is traveling with the steering angle $\delta$ at substantially zero. Based on this determination, the processor **52** detects the section where the vehicle **10** is traveling straight. If the steering angle $\delta$ is smaller than the first threshold, the process proceeds to Step S22. The operation of Step S21 is repeated until the processor **52** determines that the steering angle $\delta$ is smaller than the first threshold. Note that the processor **52** may proceed to Step S22 after the steering angle $\delta$ remains smaller than the first threshold for a predetermined period of time (e.g., several seconds) or longer, rather than proceeding to Step S22 immediately after the processor **52** determines that the steering angle $\delta$ is smaller than the first threshold.

At Step S22, the processor **52** obtains the measurement values of the traveling speed v and the angular velocity $\omega$ of the vehicle **10.** The processor **52** obtains the measurement value of the traveling speed v from the vehicle speed sensor **42** and obtains the measurement value of the angular velocity $\omega$ from the angular velocity sensor **44.**

At Step S23, the processor **52** determines the actual traveling curvature $\kappa$ of the vehicle **10** using the relationship of Equation (3) based on the traveling speed v and the angular velocity $\omega$.

At Step S24, the processor **52** determines the first error coefficient $\alpha$ based on the traveling curvature $\kappa$ determined at Step S23 and the relationship of $\kappa = \tan(\alpha) / L$ obtained by substituting $\delta = 0$ into Equation (2). Herein, the wheelbase L is a known value and is stored beforehand in a storage such as the memory **54.** The processor **52** stores the determined coefficient $\alpha$ in the storage.

At Step S25, the processor **52** determines whether or not the absolute value of the steering angle measured by the steering angle sensor **46** or the steering command angle is greater than the second threshold. Based on this determination, the processor **52** detects a section where the vehicle **10** is making a turn. The second threshold may be the same value as the first threshold mentioned above or may be a value greater than the first threshold. The second threshold can be set to a value within the range of, for example, 0.01° to 30°. If the steering angle $\delta$ is greater than the second threshold, the process proceeds to Step S26. The operation of Step S25 is repeated until the steering angle $\delta$ is determined to be greater than the threshold.

At Step S26, the processor **52** determines whether or not the variation over time of the steering angle $\delta$ is small and stable. For example, the processor **52** may determine whether or not the steering angle $\delta$ is stable by determining whether or not the average time variation rate of the steering angle $\delta$ over a predetermined time period is smaller than a threshold that is close to zero. If the steering angle $\delta$ is stable, the process proceeds to Step S27. If the steering angle $\delta$ is not stable, the process returns to Step S25.

At step S27, the processor **52** obtains the measurement values of the traveling speed v and the angular velocity $\omega$ of the vehicle **10.** The processor **52** obtains the measurement value of the traveling speed v from the vehicle speed sensor **42** and obtains the measurement value of the angular velocity $\omega$ from the angular velocity sensor **44.**

At Step S28, the processor **52** determines the actual traveling curvature $\kappa$ of the vehicle **10** using the relationship of Equation (3) based on the traveling speed v and the angular velocity $\omega$.

At Step S29, the processor **52** determines the second error coefficient $\beta$ based on the first error coefficient $\alpha$ determined at Step S24, the traveling curvature $\kappa$ determined at Step S27, and the relationship of Equation (2). The processor **52** stores the determined coefficient $\beta$ in the storage.

After completion of Step S29, the processor **52** can initiate automatic steering control, which includes the steering angle correction with the use of the determined error coefficients $\alpha$ and $\beta$. For example, the processor **52** can realize steering control with reduced effects of the offset error and the scale factor error by correcting the steering angle $\delta$ (instruction value) to $\delta'$ that is calculated by $\delta'=(\delta-\alpha)/\beta$.

The operation shown in FIG. **5** may be repeatedly executed while the vehicle **10** is traveling. The processor **52** may determine the final coefficients $\alpha$ and $\beta$ by the process of temporally averaging each of the coefficients $\alpha$ and $\beta$ repeatedly calculated over a predetermined time period. For example, the coefficient $\alpha$ may be calculated multiple times by repeating the processes from Step S22 to Step S24 during the period where the vehicle **10** is substantially traveling straight, and the average for these calculated values may be determined as the final coefficient $\alpha$. Likewise, the coefficient $\beta$ may be calculated multiple times by repeating the processes from Step S27 to Step S29 during the period where the variation over time of the steering angle $\delta$ is small, and the average for these calculated values may be determined as the final coefficient $\beta$. The processor **52** may perform the operation of determining the coefficients $\alpha$ and $\beta$ at regular intervals during traveling of the vehicle **10** or only within a relatively short time period after the vehicle **10** starts traveling. Alternatively, the processor **52** may perform the operation of determining the coefficients $\alpha$ and $\beta$ at a timing specified by a user.

The processor **52** may continuously update the first error coefficient $\alpha$ and the second error coefficient $\beta$ while the vehicle **10** is traveling and correct the steering angle based on the updated first error coefficient $\alpha$ and the updated second error coefficient $\beta$. This enables real-time optimization of the steering angle according to the changes in the conditions of the traveling vehicle **10** or the surrounding environment.

The processor **52** may select a portion of the sensor data obtained while the vehicle **10** is traveling, to be used in determining the curvature, according to the contents of the sensor data and/or the travel conditions of the vehicle **10.** For example, the processor **52** may determine the curvature using only a portion of the data from the vehicle speed sensor **42** and/or the angular velocity sensor **44** which is acquired during a period where at least one of the vehicle speed, the acceleration, or the angular velocity meets a predetermined condition. The predetermined condition can include, for example, at least one of the following conditions: the vehicle speed is lower than the reference speed, the time variation rate of the acceleration is lower than the reference value, and the time variation rate of the angular velocity is lower than the reference value. This enables more accurate determination of the curvature based on the sensor data acquired during a period where the variation of the curvature is small or a period where the acceleration or deceleration is small.

Through the above operations, the processor **52** can determine the error coefficients $\alpha$ and $\beta$ while the user ordinarily drives the vehicle **10** to travel, without driving the vehicle **10** to travel in any special mode for determination of the error coefficients $\alpha$ and $\beta$. Since the information necessary for the steering angle correction can be collected during ordinary traveling of the vehicle **10,** driving in a special mode, which is conventionally necessary, can be eliminated.

According to conventional methods, information acquired during driving along a predetermined travel path is post-processed to calculate the actual traveling curvature with high precision, so that the parameters for the steering angle correction can be obtained. On the other hand, when driving along a predetermined travel path is not performed as in the present example embodiment, it is necessary to acquire the actual traveling curvature while it is uncertain what route a driver is to take for traveling, and the method of acquiring the actual traveling curvature in real time, rather than through postprocessing, is necessary. In the present example embodiment, the relationship of Equation (3) may be additionally used so that the actual traveling curvature can be dynamically estimated based on the information obtained from the vehicle speed sensor **42** and the angular velocity sensor **44.** Due to this feature, it is not necessary to perform a driving operation along a predetermined travel path, so that the convenience can be improved. In the present example embodiment, the correction parameters can be continuously updated through ordinary traveling, and the update is not limited to the timing of vehicle maintenance, repair, or modification. As a result, decrease of the steering control precision due to deterioration over time can be substantially prevented, and the need for users to perform the operations of periodically updating the correction parameters can be eliminated.

Next, more specific example embodiments will be described in which the techniques of the present disclosure are applied to an agricultural work vehicle, which is an example of the vehicle **10.**

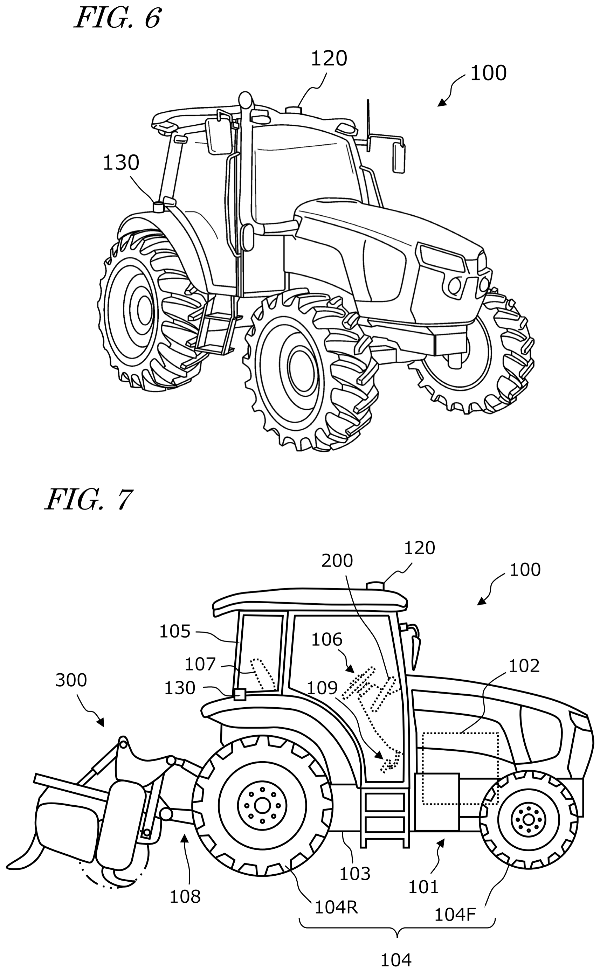

FIG. **6** is a perspective view showing an example of the appearance of a work vehicle **100.** FIG. **7** is a side view schematically showing an example of the work vehicle **100** and an implement **300** linked to the work vehicle **100.** The work vehicle **100** of the present example embodiment is a tractor for use in a field. The work vehicle **100** has an automatic steering function.

The work vehicle **100** of the present example embodiment includes a positioning device **120** and one or more obstacle sensors **130.** While one obstacle sensor **130** is illustrated in FIG. **7,** the obstacle sensor **130** may be provided at a plurality of locations on the work vehicle **100.** Note that the obstacle sensor **130** is provided when necessary. If the obstacle sensor **130** is not needed, the work vehicle **100** may not include the obstacle sensor **130.**

As shown in FIG. **7,** the work vehicle **100** includes a vehicle body **101,** a prime mover (engine) **102,** and a transmission **103.** The vehicle body **101** includes wheels **104** with tires and a cabin **105.** The wheels **104** include a pair of front wheels **104F** and a pair of rear wheels **104R.** These wheels **104,** together with the front and rear axles, are components of the drivetrain. A driver seat **107,** a steering device **106,** a plurality of pedals **109,** an operation terminal **200,** and operation switches are provided inside the cabin **105.** One or both of the front wheels **104F** and the rear wheels **104R** may be replaced with crawlers, which are realized by a plurality of wheels with an endless track attached thereto, rather than wheels with tires.

The positioning device **120** of the present example embodiment includes a GNSS receiver. The GNSS receiver may include an antenna that receives signals from GNSS satellites and a processor that determines the position of the work vehicle **100** based on the signals received by the antenna. The positioning device **120** receives GNSS signals transmitted from a plurality of GNSS satellites and performs positioning based on the GNSS signals. GNSS is a generic term for satellite positioning devices such as GPS (Global Positioning System), QZSS (Quasi-Zenith Satellite System, e.g., MICHIBIKI), GLONASS, Galileo, and BeiDou. While the positioning device **120** of the present example embodiment is provided at the top of the cabin **105,** it may be provided at other locations.

The positioning device **120** may include other types of devices such as a LiDAR sensor or a camera (including an image sensor) instead of or in addition to the GNSS receiver. If there are geographic objects in the environment in which the work vehicle **100** is traveling that function as characteristic points, the position of the work vehicle **100** can be estimated with high accuracy based on data acquired by the LiDAR sensor or the camera and the environment map stored in the storage **170** in advance. The LiDAR sensor or the camera may be used in conjunction with the GNSS receiver. By using data acquired by the LiDAR sensor or the camera to correct or complement position data based on GNSS signals, it is possible to identify the position of the work vehicle **100** with a higher accuracy.

The prime mover **102** may be a diesel engine, for example. An electric motor may be used instead of a diesel engine. The transmission **103** can vary the propulsion and traveling speed of the work vehicle **100** by changing the gear. The transmission **103** can also switch between forward and reverse for the work vehicle **100.**

The steering device **106** includes a steering wheel, a steering shaft connected to the steering wheel, and a power steering device that assists the steering by the steering wheel. The front wheels **104F** are steered wheels, and it is possible to change the direction of travel of the work vehicle **100** by changing the steering angle. The steering angle of the front wheels **104F** can be changed by operating the steering wheel. The power steering device includes a hydraulic device or an electric motor that supplies auxiliary power to change the steering angle of the front wheels **104F.** When automatic steering is performed, the steering angle is automatically adjusted by the force from the hydraulic device or the electric motor as controlled by the controller arranged in the work vehicle **100.**

The plurality of pedals **109** include an accelerator pedal, clutch pedal, and a brake pedal. Each pedal can be provided with a sensor that detects being depressed by foot.

A link device **108** is provided at the rear of the vehicle body **101.** The link device **108** includes, for example, a 3-point support device (also referred to as a "3-point link" or "3-point hitch"), a PTO (Power Take Off) shaft, a universal joint, and a communication cable. The link device **108** allows the implement **300** to be attached to or detached from the work vehicle **100.** The link device **108** can control the position or attitude of the implement **300** by raising or lowering the 3-point link using a hydraulic device, for example. Power can be sent from the work vehicle **100** to the implement **300** via the universal joint. The work vehicle **100** can cause the implement **300** to perform a predetermined task while pulling the implement **300.** The link device may be provided at the front of the vehicle body **101.** In that case, the implement can be connected to the front of the work vehicle **100.**

While the implement **300** shown in FIG. **7** is a rotary tiller, the implement **300** is not limited to a rotary tiller. For example, any implement such as a mower (lawn mower), a seeder (seed sower), a spreader (fertilizer spreader), a rake implement, a baler (lawn collector), a harvester (harvesting machine) a sprayer, or a harrow can be connected to the work vehicle **100.**

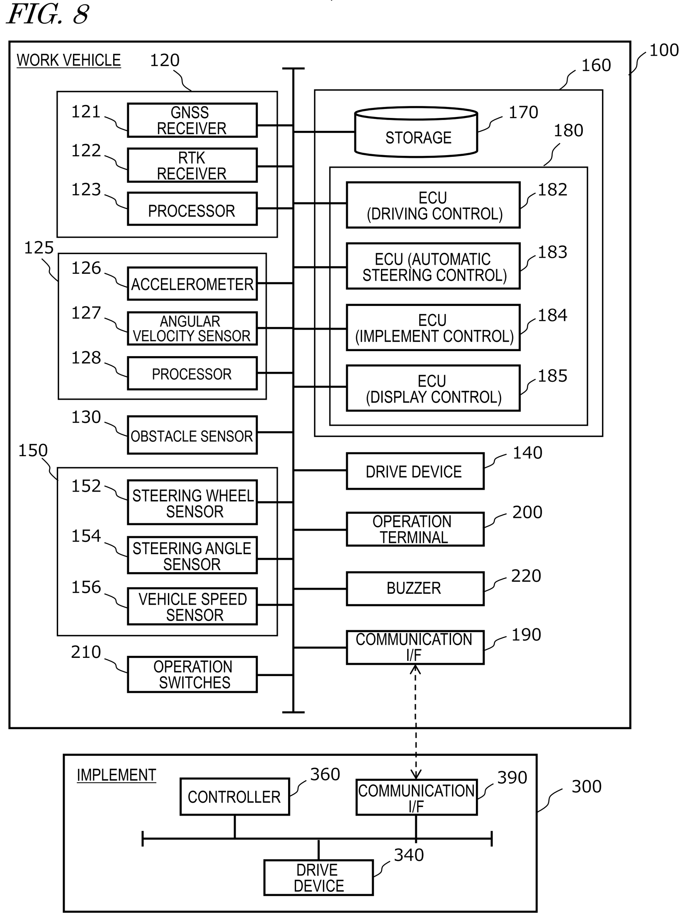

FIG. **8** is a block diagram showing an example schematic configuration of the work vehicle **100** and the implement **300.** The work vehicle **100** and the implement **300** can communicate with each other via the communication cable included in the link device **108.**

The work vehicle **100** in the example of FIG. **8** includes an inertial measurement unit (IMU) **125,** a drive device **140,** sensors **150,** a control system **160,** a communication interface (I/F) **190,** operation switches **210,** and a buzzer **220** in addition to the positioning device **120,** the obstacle sensor **130,** and the operation terminal **200.** These elements can be connected to one another such that they can communicate with one another via a bus.

The positioning device **120** includes a GNSS receiver **121,** an RTK receiver **122,** and a processor **123.** The inertial measurement unit **125** includes an accelerometer **126,** an angular velocity sensor **127,** and a processor **128.** The sensors **150** include, for example, a steering wheel sensor **152,** a steering angle sensor **154,** and a vehicle speed sensor **156.** The control system **160** includes the storage **170** and a controller **180.** The controller **180** includes a plurality of electronic control units (ECU) **182, 183, 184,** and **185.** The implement **300** includes a drive device **340,** a controller **380,** and a communication interface (I/F) **390.** Note that FIG. **8** shows the elements that are relatively highly relevant to the automatic steering by the work vehicle **100,** and the other elements are not shown in the figure.

The GNSS receiver **121** in the positioning device **120** receives satellite signals (also referred to as "GNSS signals") transmitted from a plurality of GNSS satellites and generates GNSS data based on the satellite signals. The GNSS data is generated in a predetermined format, such as the NMEA-0183 format. The GNSS data may include, for example, values indicating the identification numbers, elevation angles, azimuth angles, and reception strength of satellites from which satellite signals are received. The signal reception strength can be expressed by a value such as the carrier-to-noise power density ratio (C/N0). The GNSS data can also include the position information of the work vehicle **100** calculated based on a plurality of received satellite signals and the information indicative of the reliability of the position information. The position information can be represented by, for example, the latitude, longitude, and height above mean sea level. The reliability of the position information can be represented by, for example, DOP value that indicates the configuration of satellites.

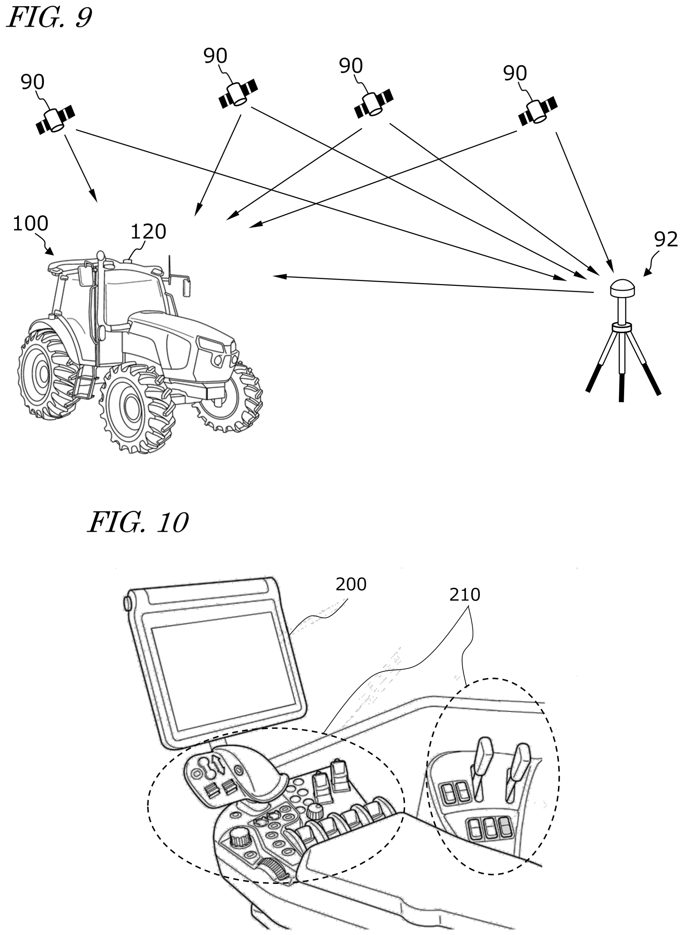

The positioning device **120** shown in FIG. **8** performs positioning of the work vehicle **100** using RTK (Real Time Kinematic)-GNSS. FIG. **9** is a conceptual diagram showing an example of the work vehicle **100** that performs positioning using RTK-GNSS. With the positioning using RTK-GNSS, correction signals transmitted from a reference station **92** are used, in addition to the satellite signals transmitted from a plurality of GNSS satellites **90.** The reference station **92** may be installed near the field where the work vehicle **100** performs a tasked travel (e.g., within 10 km of the work vehicle **100).** The reference station **92** generates a correction signal in RTCM format, for example, based on satellite signals received from a plurality of GNSS satellites **90,** and transmits the correction signal to the positioning device **120.** The RTK receiver **122** includes an antenna and a modem, and receives the correction signal transmitted from the reference station **92.** The processor **123** of the positioning device **120** corrects the positioning results by the GNSS receiver **121** based on the correction signal. Using RTK-GNSS, it is possible to perform positioning with an accuracy of a few centimeters, for example. Position information including latitude, longitude and altitude is acquired through high-accuracy positioning using RTK-GNSS. The processor **123** of the positioning device **120** calculates the position of the work vehicle **100** at a frequency of about 1 to 10 times per second, for example. The positioning device **120** outputs time series data including information of the calculated position (coordinates).

Note that the positioning method is not limited to RTK-GNSS, and any positioning method may be used (such as interferometric positioning or relative positioning) as long as position information of the required accuracy is obtained. For example, positioning using VRS (Virtual Reference Station) or DGPS (Differential Global Positioning System) may be used. If position information of the required accuracy can be obtained without using the correction signal transmitted from the reference station **92,** the position information may be generated without using the correction signal. In such a case, the positioning device **120** may not include an RTK receiver **122.**

Instead of the inertial measurement unit **125,** the accelerometer **126** and the angular velocity sensor **127** may be separately provided on the work vehicle **100.** The accelerometer **126** and the angular velocity sensor **127** are included in the sensors **150.** The accelerometer **126** is, for example, a 3-axis accelerometer. The angular velocity sensor **127** is, for example, a 3-axis gyroscope. The processor **128** can output timeseries data containing the position and orientation information of the work vehicle **100** by performing the process of, for example, time-integrating the measurement values of the accelerometer **126** and the measurement values of the angular velocity sensor **127.** The processor **128** may perform a necessary correction process on the measurement values of the accelerometer **126** and the measurement values of the angular velocity sensor **127** instead of performing the above-described process and output data containing the corrected acceleration and angular velocity and the measurement time information. The inertial measurement unit **125** may include an orientation sensor such as a 3-axis geomagnetic sensor. The inertial measurement unit **125** functions as a motion sensor and can output signals indicating various quantities such as acceleration, speed, displacement, and attitude of the work vehicle **100.** The inertial measurement unit **125** can output the signal at a frequency of, for example, several tens to several thousands of times per second.

The positioning device **120** and the inertial measurement unit **125** may be integrated as a single device. The processes of the processors **123** and **128** may be executed by a single processor. At least a portion of the processes of the processors **123** and **128** may be executed by a processor included in the controller **180.** Such a processor can estimate the position and orientation of the work vehicle **100** with higher accuracy based on signals output from the inertial measurement unit **125** in addition to the GNSS signals and the correction signals. The signals output from the inertial measurement unit **125** can be used to correct or complement the position calculated based on the GNSS signals and the correction signals. The inertial measurement unit **125** can output signals at a higher frequency than the positioning device **120.** The position and orientation of the work vehicle **100** can be measured at a higher frequency (e.g., 10 Hz or higher) using such high-frequency signals.

The positioning device **120** may include other types of sensors, such as a LiDAR sensor or an image sensor, in addition to or instead of the GNSS receiver **121** and the RTK receiver **122.** If there are geographic objects in the environment in which the work vehicle **100** is traveling that function as landmarks, the position and orientation of the work vehicle **100** can be estimated by matching sensor data output from these sensors with an environment map. With such a configuration, an external sensor such as a LiDAR sensor or an image sensor may be included in the positioning device.

The drive device **140** includes various devices to drive the work vehicle **100** and driving the implement **300,** such as the prime mover **102,** the transmission **103,** the steering device **106,** and the link device **108** described above. The prime mover **102** may include an internal combustion engine, such as a diesel engine. The drive device **140** may include an electric motor for traction instead of or in addition to the internal combustion engine.

The steering wheel sensor **152** measures the rotation angle of the steering wheel of the work vehicle **100.** The steering angle sensor **154** measures the steering angle of the front wheels **104F,** which are steered wheels. The vehicle speed sensor **156** is a sensor that measures the traveling speed (vehicle speed) of the work vehicle **100.**

The vehicle speed sensor **156** can be configured to measure, for example, the rotation speed of the axle connected to the wheels **104,** i.e., the number of rotations per unit time. The thus-configured vehicle speed sensor **156** can include a magnetoresistive element (MR), a Hall element, or an electromagnetic pickup. The vehicle speed sensor **156** can be configured to output a pulse signal proportional to the rotation speed of the gear included in the transmission, for example.

The measurement values taken by the steering wheel sensor **152,** the steering angle sensor **154,** and the vehicle speed sensor **156** are used in steering control by the controller **180.**

The storage **170** includes one or more storage medium, such as a flash memory or a magnetic disk. The storage **170** stores various data generated by the sensors and the controller **180.** The data stored in the storage **170** may include map data of the environment in which the work vehicle **100** travels and data of the target route for automatic steering. The storage **170** also stores computer programs that cause the ECUs in the controller **180** to perform the various operations to be described below. Such computer programs may be provided to the work vehicle **100** via a storage medium (e.g., a semiconductor memory or an optical disc) or an electrical communication line (e.g., the Internet). Such a computer program(s) may be marketed as commercial software.

The controller **180** includes a plurality of ECUs. The plurality of ECUs include the ECU **182** configured or programmed to perform driving control, the ECU **183** configured or programmed to perform automatic steering control, the ECU **184** configured or programmed to perform implement control, and the ECU **185** configured or programmed to perform display control. The ECU **182** is configured or programmed to control the speed of the work vehicle **100** by controlling the prime mover **102,** the transmission **103,** the accelerator, and the brake included in the drive device **140.** Also, the ECU **182** is configured or programmed to control the steering of the work vehicle **100** by controlling the hydraulic device or the electric motor included in the steering device **106** based on the measurement values of the steering wheel sensor **152.** The ECU **183** is configured or programmed to perform calculation and control to achieve the automatic steering driving based on signals output from the positioning device **120,** the inertial measurement unit **125,** the steering wheel sensor **152,** the steering angle sensor **154,** the vehicle speed sensor **156,** etc. The ECU **183** is configured or programmed to perform the functions as the controller **50** shown in FIG. **1** and makes corrections to the steering angle by the method described with reference to FIG. **2** through FIG. **5.** During automatic steering driving, the ECU **183** is configured or programmed to send a steering angle change instruction to the ECU **182.** The ECU **182** is configured or programmed to change the steering angle by controlling the steering device **106** in response to the instruction. The ECU **184** is configured or programmed to control the operation of the link device **108** in order to make the implement **300** perform the desired operation. The ECU **184** is configured or programmed to also generate signals to control the operation of the implement **300,** and transmits the signal from the communication I/F **190** to the implement **300.** The ECU **185** is configured or programmed to control the display of the operation terminal **200.** The ECU **185,** for example, is configured or programmed to cause the display device of the operation terminal **200** to display various items, such as a map of the field, the position of the work vehicle **100** and the target route on the map, pop-up notifications, and the setting screen.

With the operation of these ECUs, the controller **180** is configured or programmed to realize driving by manual steering or automatic steering. During automatic steering driving, the controller **180** is configured or programmed to determine the steering command angle for the steered wheels based on the position and orientation of the work vehicle **100,** which is measured or estimated by the positioning device **120** and the inertial measurement unit **125,** and the target route stored in the storage **170.** The controller **180** is configured or programmed to correct the determined steering command angle by the method described with reference to FIG. **2** through FIG. **5** and controls the drive device **140** based on the corrected steering command angle. Thus, the controller **180** enables the work vehicle **100** to travel along the target route. Note that the controller **180** may be configured or programmed to automatically control not only the steering of the work vehicle **100** but also the vehicle speed. In other words, the controller **180** may be configured or programmed to operate in an automatic traveling mode in which the work vehicle **100** automatically travels along a pre-set target route.

The plurality of ECUs included in the controller **180** can communicate with each other according to a vehicle bus standard, such as CAN (Controller Area Network), for example. In FIG. **8,** the ECUs **182, 183, 184,** and **185** are shown as individual blocks, but their functions may each be implemented by a plurality of ECUs. An in-vehicle computer that integrates at least some of the functions of the ECU **182, 183, 184,** and **185** may be provided. The controller **180** may include ECUs other than the ECUs **182, 183, 184,** and **185.** Any number of ECUs may be provided according to the functions. Each ECU includes a control circuit containing one or more processors.

The communication I/F **190** is a circuit to communicate with a communication I/F **390** of the implement **300.** The communication I/F **190** exchanges signals in conformity with the ISOBUS standard, such as ISOBUS-TIM, with the communication I/F **390** of the implement **300.** This allows the implement **300** to perform desired operations and to acquire information from the implement **300.** The communication I/F **190** may communicate with an external computer via a wired or wireless network. The external computer may be a server computer in an agricultural management system that centrally manages information regarding fields, for example, on a cloud and supports agriculture by utilizing data on the cloud.

The operation terminal **200** is a terminal for the user to perform operations related to the travel of the work vehicle **100** and the operation of the implement **300,** and is also referred to as a virtual terminal (VT). The operation terminal **200** may include a display device such as a touch screen and/or one or more buttons. By operating the operation terminal **200,** the user can perform various operations, such as switching the automatic steering mode on and off, setting the initial position of the work vehicle **100,** setting the target route, recording or editing maps, and switching the implement **300** on and off. At least some of these operations may also be realized by operating the operation switches **210.** The display on the operation terminal **200** is controlled by the ECU **185.**

The buzzer **220** is a sound output device that emits warning sounds to notify the user of abnormalities. For example, the buzzer **220** emits a warning sound when the work vehicle **100** deviates from the target route by a predetermined distance or more during automatic steering driving. Instead of the buzzer **220,** a similar function may be achieved by the speaker of the operation terminal **200.**

The drive device **340** in the implement **300** performs the operation necessary for the implement **300** to perform predetermined work. The drive device **340** includes a device in accordance with the application of the implement **300,** such as a hydraulic device, an electric motor, or a pump. The controller **380** is configured or programmed to control the operation of the drive device **340.** The controller **380** is configured or programmed to cause the drive device **340** to perform various operations in response to signals transmitted from the work vehicle **100** via the communication I/F **390.** Also, signals corresponding to the status of the implement **300** can be transmitted from the communication I/F **390** to the work vehicle **100.**

FIG. **10** is a diagram showing an example of the operation terminal **200** and the operation switches **210** provided inside the cabin **105.** The switches **210,** which include a plurality of switches that can be operated by the user, are arranged inside the cabin **105.** The switches **210** can include, for example, a switch to switch between the automatic steering (auto-steer) mode and the manual steering (manual steer) mode, a switch to switch between forward and reverse (e.g., a shuttle lever or a shuttle switch), a switch to select the main transmission gear or the auxiliary transmission gear, and a switch to raise and lower the implement **300.**

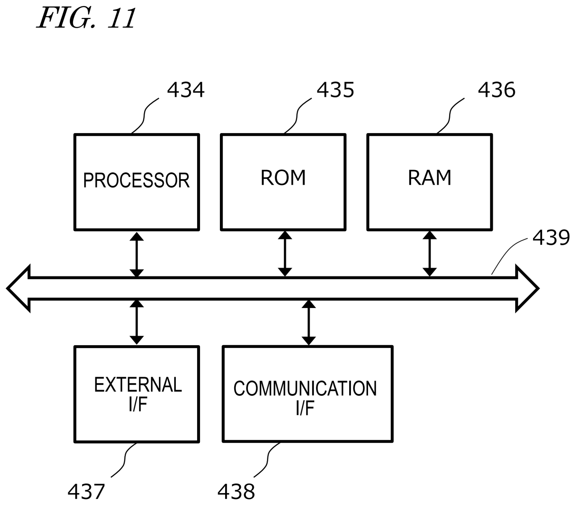

FIG. **11** is a block diagram showing an example hardware configuration of each ECU. Each ECU includes a processor **434,** a ROM **435,** a RAM **436,** an external I/F **437,** and a communication I/F **438.** These components are interconnected via a bus **439.**

The ROM **435** is, for example, a writable memory (e.g., PROM), a rewritable memory (e.g., flash memory), or a read-only memory. The ROM **435** stores a program that controls the operation of the processor **434.** The ROM **435** does not need to be a single storage medium, but may be a collection of a plurality of storage mediums. Some of the plurality of storage mediums may be removable memories.

The RAM **436** provides a work area for temporarily expanding the program stored in the ROM **435** at boot. The RAM **436** does not need to be a single storage medium, and may be a collection of a plurality of storage mediums.

The external I/F **437** is an interface for connection with external devices. The communication I/F **438** is an interface for communication with other electronic devices (e.g., sensors and other ECUs). For example, the communication I/F **438** can perform wired communication in compliance with various protocols such as CAN or Ethernet (registered trademark). The communication I/F **438** may perform wireless communication in compliance with wireless communication standards such as Bluetooth (registered trademark) and/or Wi-Fi (registered trademark).

The ECU may further include a storage capable of retaining data generated by the processor **434** for a relatively long period of time. Such a storage may be, for example, a semiconductor storage, a magnetic storage or an optical storage, or a combination thereof.

Next, the operation of the work vehicle **100** will be described. The controller **180** in the present example embodiment can be configured or programmed to switch between the manual driving mode and the automatic steering mode in response to the operation by the user (e.g., driver) of the work vehicle **100.** In the manual driving mode, the controller **180** is configured or programmed to control steering by driving the power steering device in response to the operation of the steering wheel by the user. In the automatic steering mode, the controller **180** is configured or programmed to control steering by driving the power steering device based on the position and orientation (orientation) of the work vehicle **100** estimated based on data output from the positioning device **120** and the inertial measurement unit **125,** and a target route recorded in advance. Also in the automatic steering mode, the speed is adjusted by an acceleration operation and a braking operation by the user.

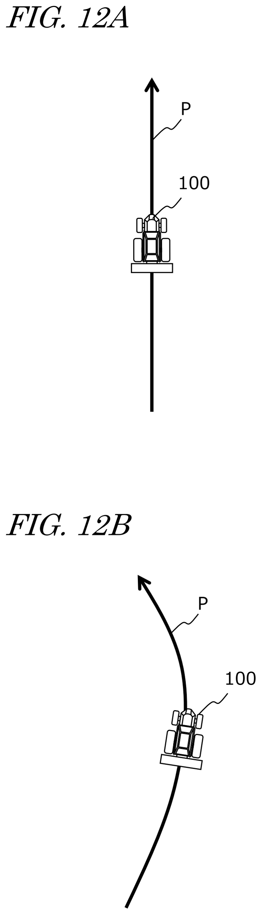

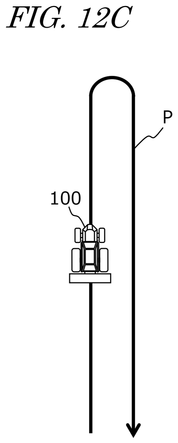

FIG. **12A** to FIG. **12C** are diagrams showing examples of how the work vehicle **100** travels in the automatic steering mode. FIG. **12A** schematically shows how the work vehicle **100** travels along a straight target route **P.** FIG. **12B** schematically shows how the work vehicle **100** travels along a curved target route **P.** FIG. **12C** schematically shows how the work vehicle **100** travels along a target route **P** that includes two adjacent straight routes and a curved route that connects them. The target route **P** is pre-set and is recorded in the storage **170.** When the work vehicle **100** is traveling in the automatic steering mode, the controller **180** is configured or programmed to repeatedly calculate the deviation between the target route **P** and the position and orientation of the work vehicle **100** estimated based on the data output from the positioning device **120** and the inertial measurement unit **125** and control the steering device so as to reduce the deviation. This causes the work vehicle **100** to travel along the target route **P.**

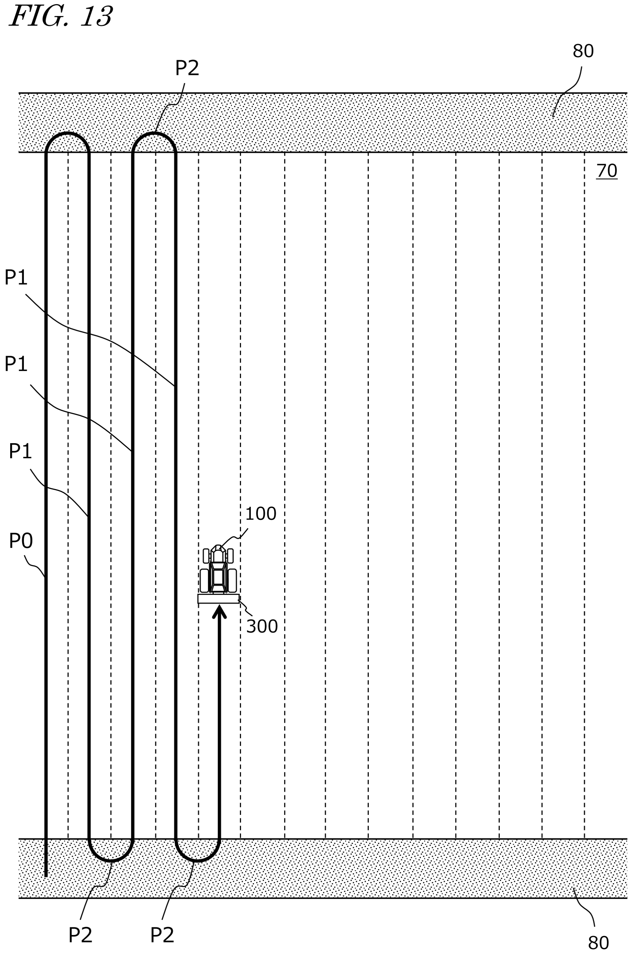

FIG. **13** is a diagram schematically showing an example of the target route for the work vehicle **100** traveling in a field by automatic steering. In this example, the field includes a work area **70** in which the work vehicle **100** and the implement **300** perform work, and a headland **80** located around the outer edge of the field. The user can set in advance which areas of the field correspond to a work area **70** and the headland **80** on the map, by operating the operation terminal **200.** The target route includes a plurality of parallel main routes **P1** and a plurality of turning routes **P2** that connect together the plurality of main routes **P1.** The main routes **P1** are located within the work area **70,** and the turning routes **P2** are located in the headland **80.** The dashed line intervals in FIG. **13** represent the working width of the implement **300.** The working width is set in advance and recorded in the storage **170.** The working width may be set by the user operating the operation terminal **200** and recorded in the storage **170.** Alternatively, the working width may be automatically recognized when the implement **300** is connected to the work vehicle **100** and recorded in the storage **170.** The interval between the plurality of main routes **P1** is adjusted to the working width. The target route may be determined based on the user's operation before automatic steering driving is started.

Next, an example of control during automatic steering by the controller **180** will be described.

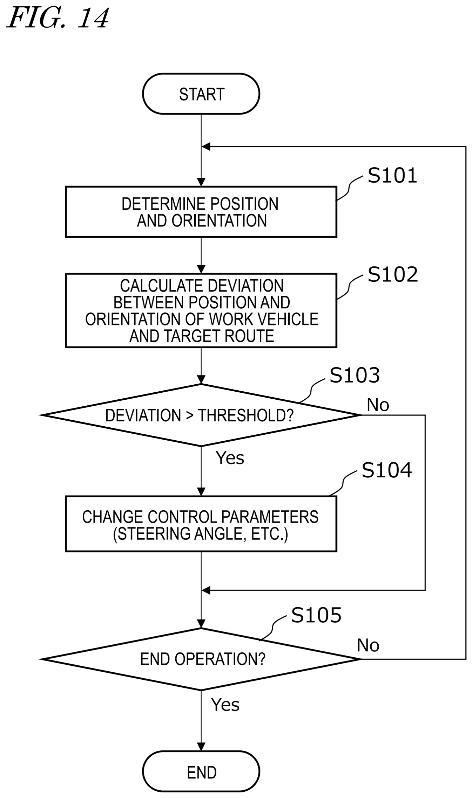

FIG. **14** is a flow chart showing an example of the operation performed during automatic steering by the controller **180.** The controller **180** is configured or programmed to perform automatic steering driving by executing the operations of steps S101 to S105 shown in FIG. **14** while the work vehicle **100** is traveling. Before the operations shown in FIG. **14,** the controller **180** is configured or programmed to determine the steering angle correction parameter by the method described with reference to FIG. **2** through FIG. **5.** After that, the controller **180** is configured or programmed to execute the operations from Step S101 to Step S105.

The controller **180** is configured or programmed to first estimate the position and the orientation of the work vehicle **100** based on data output from the positioning device **120** and the inertial measurement unit **125** (step S101). Next, the controller **180** is configured or programmed to calculate the deviation between the position and the orientation of the work vehicle **100** and the target route (step S102). The position deviation represents the distance between the position of the work vehicle **100** at that point in time and the target route. The directional deviation represents the magnitude of the angle between the orientation of the work vehicle **100** at that point in time and the direction of the target route. The controller **180** is configured or programmed to determine whether the calculated position deviation exceeds a predetermined threshold value, and whether the calculated directional deviation exceeds another predetermined threshold value (step S103). If at least one of the position deviation and the directional deviation exceeds the respective threshold value, the controller **180** is configured or programmed to change the steering angle by changing the control parameters for the steering device included in the drive device **140** so as to decrease the deviation. In this change of the steering angle, the results of the steering angle correction based on the above-described correction parameters are reflected. If neither the position deviation nor the directional deviation exceeds the respective threshold in step S103, the operation of step S104 is omitted. Subsequently, at Step S105, the controller **180** is configured or programmed to determine whether or not it has received an instruction to terminate the operation. The instruction to terminate the operation can be issued, for example, when the user instructs the termination of the automatic steering mode using the operation terminal **200** or when the work vehicle **100** reaches its destination. If no instruction to terminate the operation has been issued, the process returns to Step S101, and the same operation is executed based on the newly measured position of the work vehicle **100.** The controller **180** is configured or programmed to repeat the operations from Step S101 to S105 until an instruction to terminate the operation is issued. This operation is performed by the ECU **183** in the controller **180.**

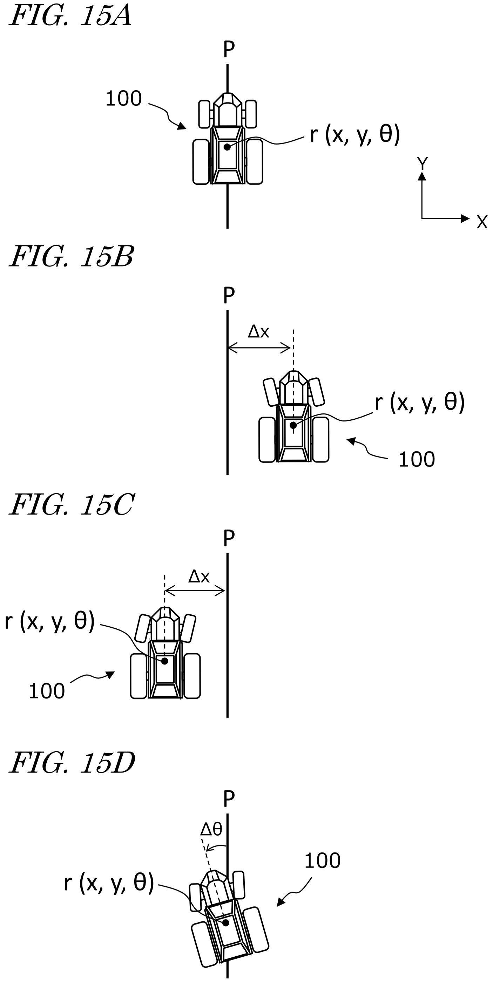

Referring to FIG. **15A** to FIG. **15D,** an example of steering control by the controller **180** will be described in more detail.

FIG. **15A** is a diagram showing an example of the work vehicle **100** traveling along the target route **P.** FIG. **15B** is a diagram showing an example of the work vehicle **100** located at a position shifted to the right from the target route **P.** FIG. **15C** is a diagram showing an example of the work vehicle **100** located at a position shifted to the left from the target route **P.** FIG. **15D** is a diagram showing an example of the work vehicle **100** oriented in a direction inclined relative to the target route **P.** In these figures, the pose, which indicates the position and orientation of the work vehicle **100** as estimated based on signals output from the positioning device **120** and the inertial measurement unit **125,** is expressed as r(x,y,θ). (x,y) are the coordinates indicating the position of the reference point of the work vehicle **100** in the XY coordinate system, which is a two-dimensional coordinate system fixed to the earth. In the examples shown in FIG. **15A** to FIG. **15D,** the reference point of the work vehicle **100** is at the location where the GNSS antenna is installed on the cabin, but the location of the reference point is arbitrary. θ is an angle that represents the measured orientation of the work vehicle **100.** In the illustrated examples, the target route **P** is parallel to the Y axis, but in general, the target route **P** is not necessarily parallel to the Y axis.

As shown in FIG. **15A,** if the position and orientation of the work vehicle **100** are not deviated from the target route **P,** the controller **180** does not change but maintains the steering angle and the speed of the work vehicle **100.**

As shown in FIG. **15B,** if the position of the work vehicle **100** is shifted to the right from the target route **P,** the controller **180** changes the steering angle by changing the rotation angle of the steering wheel included in the drive device **140** so that the travel direction of the work vehicle **100** tilts to the left to be closer to the route **P.** At this time, the speed may also be changed in addition to the steering angle. The magnitude of the steering angle may be adjusted in accordance with the magnitude of the position deviation $\Delta x$, for example.

As shown in FIG. **15C,** if the position of the work vehicle **100** is shifted to the left from the target route **P,** the controller **180** changes the steering angle by changing the rotation angle of the steering wheel so that the travel direction of the work vehicle **100** tilts to the right to be closer to the route **P.** Also in this case, the speed may also be changed in addition to the steering angle. The amount of change in the steering angle may be adjusted in accordance with the magnitude of the position deviation $\Delta x$, for example.

As shown in FIG. **15D,** if the position of the work vehicle **100** is not significantly off the target route **P,** but the orientation is different from the direction of the target route **P,** the controller **180** is configured or programmed to change the steering angle so as to reduce the directional deviation $\Delta\theta$. Also in this case, the speed may also be changed in addition to the steering angle. The magnitude of the steering angle may be adjusted in accordance with the magnitude of the position deviation $\Delta x$ and the magnitude of the directional deviation $\Delta\theta$, for example. For example, the smaller the absolute value of the position deviation $\Delta x$, the larger the amount of change in the steering angle in accordance with the directional deviation $\Delta\theta$ may be. Where the absolute value of the position deviation $\Delta x$ is large, the steering angle will need to be changed greatly in order to return to the route **P,** which will result in the absolute value of the directional deviation $\Delta\theta$ being large. Conversely, where the absolute value of the position deviation $\Delta x$ is small, the directional deviation $\Delta\theta$ needs to be brought close to zero. For this reason, it is appropriate to make relatively large the weight (i.e., control gain) of the directional deviation $\Delta\theta$ for determining the steering angle.

Control techniques such as PID control or MPC control (model predictive control) can be applied to the steering control and speed control of the work vehicle **100.** By applying these control techniques, it is possible to smoothly control the work vehicle **100** to come closer to the target route **P.**

Through the above-described operations, automatic steering is realized which enables the work vehicle **100** to travel along the target route **P.** According to the present example embodiment, at Step S104, the steering angle correction is performed based on the correction parameters $\alpha$ and $\beta$ predetermined by the method shown in FIG. **5,** for example. This enables further reduction of the deviation from the target route **P** during automatic steering driving. Since, as previously described, the correction parameters $\alpha$ and $\beta$ can be continuously updated during usual traveling, deterioration of the steering control accuracy due to deterioration over time can be suppressed. In the example embodiment described above, the work vehicle **100** may be a work vehicle that performs automated driving unmanned. In that case, elements that are only necessary for human driving, such as the cabin, the driver seat, the steering wheel, and the operation terminal, may not be provided in the work vehicle **100.** The unmanned work vehicle may perform the same operations as those in the example embodiment described above by autonomous traveling or remote control by the user.

The controller in the above-described example embodiment can also be retrofitted to vehicles that do not have those functions. Such controller can be manufactured and sold independently of vehicles. Computer programs used in such controllers can also be manufactured and sold independently of vehicles. Computer programs can be provided, for example, stored in a computer-readable non-transitory storage medium. Computer programs can also be provided as downloads via an electrical telecommunication line (e.g., the Internet).

The technologies of example embodiments of the present disclosure can be applied to work vehicles used in agricultural applications, such as tractors, transplanters, or harvesters. The technologies of example embodiments of the present disclosure can also be applied to work vehicles used in non-agricultural applications, such as construction work vehicles or snowplows. Furthermore, the technologies of example embodiments of the present disclosure can also be applied to general vehicles such as passenger cars.

While example embodiments of the present invention have been described above, it is to be understood that variations and modifications will be apparent to those skilled in the art without departing from the scope and spirit of the present invention. The scope of the present invention, therefore, is to be determined solely by the following claims.

**Claims**

1. A controller for controlling steering of a vehicle, the controller comprising:

   one or more processors; and
   one or more memories storing a computer program to be executed by the one or more processors to perform:

   obtaining sensor data from one or more sensors provided on the vehicle for use in determining a curvature of a route along which the vehicle is traveling;
   determining the curvature based on the sensor data; and
   correcting a steering angle of a steered wheel of the vehicle based on the curvature.

2. The controller of claim 1, wherein the one or more processors is/are configured or programmed to correct the steering angle based on the curvature and a wheelbase of the vehicle.

3. The controller of claim 1, wherein the one or more sensors include:

   a vehicle speed sensor to measure a traveling speed of the vehicle; and
   an angular velocity sensor to measure an angular velocity about a yaw axis of the vehicle; wherein
   the one or more processors is/are configured or programmed to determine the curvature based on the traveling speed and the angular velocity.

4. The controller of claim 3, wherein the one or more processors is/are configured or programmed to determine the curvature based on a relationship $\kappa = \omega/v$ where v is the traveling speed, $\omega$ is the angular velocity, and $\kappa$ is the curvature.

5. The controller of claim 4, wherein

   the one or more processors is/are configured or programmed to determine a first error coefficient $\alpha$ and a second error coefficient $\beta$ based on a relationship:

$$\kappa = \tan(\delta \times \beta + \alpha)/L\ldots\ldots\ldots\text{Equation 1,}$$

where $\delta$ is the steering angle of the vehicle before correction, L is a wheelbase, $\alpha$ is the first error coefficient, and $\beta$ is the second error coefficient; and

the one or more processors is/are configured or programmed to correct the steering angle based on the first error coefficient $\alpha$ and the second error coefficient $\beta$.

6. The controller of claim 5, wherein

the one or more sensors include a steering angle sensor to measure the steering angle of the vehicle;

the one or more processors is/are configured or programmed to determine the curvature $\kappa$ based on the traveling speed v and the angular velocity $\omega$ during a period in which the vehicle is traveling while an absolute value of the measured steering angle is smaller than a first threshold; and

the one or more processors is/are configured or programmed to determine the first error coefficient $\alpha$ based on a relationship $\kappa = \tan(\alpha) / L$, obtained by substituting $\delta = 0$ into Equation 1.

7. The controller of claim 6, wherein the one or more processors is/are configured or programmed to determine the second error coefficient $\beta$ based on the determined first error coefficient $\alpha$, the curvature $\kappa$ determined based on the traveling speed v and the angular velocity $\omega$ during a period in which the vehicle is traveling while the absolute value of the steering angle is greater than a second threshold, and Equation 1.

8. The controller of any of claims 5 to 7, wherein the one or more processors is/are configured or programmed to continuously update the first error coefficient $\alpha$ and the second error coefficient $\beta$ while the vehicle is traveling and correct the steering angle based on the updated first error coefficient $\alpha$ and the updated second error coefficient $\beta$.

9. The controller of any of claims 1 to 8, wherein the one or more processors is/are configured or programmed to select a portion of the sensor data obtained while the vehicle is traveling, to be used in determining the curvature, based on at least one of contents of the sensor data or a travel condition of the vehicle.

10. The controller of any of claims 1 to 9, wherein

the vehicle is capable of operating in an automatic steering mode; and
the one or more processors is/are configured or programmed to:

determine a steering command angle based on a target route and a position of the vehicle;
determine a steering angle correction parameter based on the curvature;
correct the steering command angle based on the steering angle correction parameter; and
control steering of the vehicle based on the corrected steering command angle.

11. The controller of any of claims 1 to 9, wherein

the vehicle is capable of operating in an automatic steering mode; and
in the automatic steering mode, the one or more processors is/are configured or programmed to:

obtain information indicative of a measured position of the vehicle from a positioning device provided on the vehicle;
retrieve information indicative of a target route of the vehicle from a storage;
determine a steering command angle based on the measured position and the target route;
determine a steering angle correction parameter based on the curvature;
correct the steering command angle based on the steering angle correction parameter; and
control steering of the vehicle based on the corrected steering command angle.

12. The controller of any of claims 1 to 11, wherein the vehicle is an agricultural tractor.

13. A vehicle comprising:

the controller as set forth in any of claims 1 to 12;
the one or more sensors;
a drivetrain including a steered wheel; and
an actuator to drive the steered wheel based on an instruction from the controller.

14. A method executed by one or more computers to control steering of a vehicle, the method comprising:

obtaining sensor data from one or more sensors provided on the vehicle for use in determining a curvature of a route along which the vehicle is traveling;
determining the curvature based on the sensor data; and
correcting a steering angle of a steered wheel of the vehicle based on the curvature.

15. A computer program product executable by one or more computers to control steering of a vehicle, the computer program causing the one or more computers to:

obtain sensor data from one or more sensors provided on the vehicle for use in determining a curvature of a route along which the vehicle is traveling;
determine the curvature based on the sensor data; and
correct a steering angle of the vehicle based on the curvature.

*FIG. 1*

VEHICLE — 10

POSITIONING DEVICE — 30

SENSORS — 40

VEHICLE SPEED SENSOR — 42

ANGULAR VELOCITY SENSOR — 44

STEERING ANGLE SENSOR — 46

CONTROLLER — 50

PROCESSOR — 52

MEMORY — 54

ACTUATOR — 60

DRIVETRAIN — 65

*FIG. 2*

```
        ┌──────────────┐
        │    START     │
        └──────┬───────┘
               │
               ▼
┌─────────────────────────────┐      S11
│  OBTAIN SENSOR DATA FROM     │
│  ONE OR MORE SENSORS         │
└─────────────┬───────────────┘
              │
              ▼
┌─────────────────────────────┐      S12
│  DETERMINE CURVATURE OF      │
│  ROUTE ALONG WHICH VEHICLE   │
│  IS TRAVELING BASED ON       │
│  SENSOR DATA                 │
└─────────────┬───────────────┘
              │
              ▼
┌─────────────────────────────┐      S13
│  MAKE STEERING ANGLE         │
│  CORRECTION TO STEERED       │
│  WHEELS OF VEHICLE BASED     │
│  ON CURVATURE                │
└─────────────┬───────────────┘
              │
              ▼
        ┌──────────────┐
        │     END      │
        └──────────────┘
```

## FIG. 3A

## FIG. 3B

## FIG. 4

$$\kappa_{theory} = \frac{1}{r} = \frac{\tan \delta}{L} \quad (1)$$

$$\kappa = \frac{\tan(\delta \times \beta + \alpha)}{L} \quad (2)$$

$$\kappa = \frac{\omega}{v} \quad (3)$$

## FIG. 5

```
                    ┌─────────────┐
                    │    START    │
                    └─────────────┘
                           │
                           │◄──────────────────────┐
                           ▼                        │
                    ╱─────────────╲   S21           │
                   ╱ ABSOLUTE VALUE ╲               │
                  ╱  OF STEERING ANGLE ╲  No        │
                  ╲  < FIRST THRESHOLD? ╱───────────┘
                   ╲                 ╱
                    ╲───────────────╱
                           │ Yes
                           ▼
            ┌──────────────────────────────┐  S22
            │    OBTAIN MEASUREMENT         │
            │ VALUES OF TRAVELING SPEED     │
            │  v AND ANGULAR VELOCITY ω     │
            └──────────────────────────────┘
                           │
                           ▼
            ┌──────────────────────────────┐  S23
            │    DETERMINE ACTUAL           │
            │ TRAVELING CURVATURE κ OF      │
            │ VEHICLE BY κ = ω/v BASED ON   │
            │  TRAVELING SPEED v AND        │
            │   ANGULAR VELOCITY ω          │
            └──────────────────────────────┘
                           │
                           ▼
            ┌──────────────────────────────┐  S24
            │  DETERMINE FIRST ERROR        │
            │   COEFFICIENT α BASED ON      │
            │       κ = tan(α)/L            │
            └──────────────────────────────┘
                           │
                           ▼
                           │◄──────────────┐
          ┌───────────────▼───────────╲    │
    No    ╱         ABSOLUTE VALUE      ╲   │
   ┌──────  OF STEERING ANGLE            ╲  │ S25
   │      ╲  > SECOND THRESHOLD?         ╱  │
   │       ╲───────────────────────────╱   │
   │                  │ Yes                 │
   │                  ▼                     │
   │          ╱───────────────╲  S26        │
   │         ╱  STEERING ANGLE δ ╲  No       │
   │         ╲   IS STABLE?     ╱───────────┘
   │          ╲───────────────╱
   │                  │ Yes
   └──────────────────┤
```

$\kappa = \tan(\alpha)/L$

$\kappa = \tan(\delta \times \beta + \alpha) / L$

```
            ┌──────────────────────────────┐  S27
            │    OBTAIN MEASUREMENT         │
            │ VALUES OF TRAVELING SPEED     │
            │  v AND ANGULAR VELOCITY ω     │
            └──────────────────────────────┘
                           │
                           ▼
            ┌──────────────────────────────┐  S28
            │    DETERMINE ACTUAL           │
            │ TRAVELING CURVATURE κ OF      │
            │ VEHICLE BY κ = ω/v BASED ON   │
            │  TRAVELING SPEED v AND        │
            │   ANGULAR VELOCITY ω          │
            └──────────────────────────────┘
                           │
                           ▼
            ┌──────────────────────────────┐  S29
            │  DETERMINE SECOND ERROR       │
            │   COEFFICIENT β BASED ON      │
            │  κ = tan(δ × β+α) / L         │
            └──────────────────────────────┘
                           │
                           ▼
                    ┌─────────────┐
                    │     END     │
                    └─────────────┘
```

22

*FIG. 6*

*FIG. 7*

## FIG. 8

WORK VEHICLE 120 — 100 — 160

GNSS RECEIVER 121

RTK RECEIVER 122

PROCESSOR 123

STORAGE 170 — 180

ECU (DRIVING CONTROL) 182

ECU (AUTOMATIC STEERING CONTROL) 183

125

ACCELEROMETER 126

ANGULAR VELOCITY SENSOR 127

PROCESSOR 128

ECU (IMPLEMENT CONTROL) 184

ECU (DISPLAY CONTROL) 185

OBSTACLE SENSOR 130

150

STEERING WHEEL SENSOR 152

STEERING ANGLE SENSOR 154

VEHICLE SPEED SENSOR 156

DRIVE DEVICE 140

OPERATION TERMINAL 200

BUZZER 220

COMMUNICATION I/F 190

OPERATION SWITCHES 210

IMPLEMENT

CONTROLLER 360

COMMUNICATION I/F 390 — 300

DRIVE DEVICE 340

FIG. 9

FIG. 10

*FIG. 11*

434      435      436

| PROCESSOR | ROM | RAM |

439

| EXTERNAL I/F | COMMUNICATION I/F |

437      438

## FIG. 12A

## FIG. 12B

## FIG. 12C

FIG. 13

FIG. 14

```
                    ┌─────────────┐
                    │    START    │
                    └──────┬──────┘
                           │
                           ▼
              ┌────────────────────────────┐  S101
              │   DETERMINE POSITION        │
              │   AND ORIENTATION           │
              └────────────┬───────────────┘
                           │
                           ▼
              ┌────────────────────────────┐  S102
              │   CALCULATE DEVIATION       │
              │   BETWEEN POSITION AND      │
              │   ORIENTATION OF WORK       │
              │   VEHICLE AND TARGET ROUTE  │
              └────────────┬───────────────┘
                           │
                           ▼               S103
                    ◇─────────────◇   No
              < DEVIATION > THRESHOLD? >─────┐
                    ◇─────────────◇          │
                           │ Yes             │
                           ▼          S104    │
              ┌────────────────────────────┐ │
              │  CHANGE CONTROL PARAMETERS  │ │
              │  (STEERING ANGLE, ETC.)     │ │
              └────────────┬───────────────┘ │
                           │◄────────────────┘
                           ▼        S105
                    ◇─────────────◇   No
              <   END OPERATION?   >──────────┐
                    ◇─────────────◇           │
                           │ Yes              │
                           ▼                  │
                    ┌─────────────┐           │
                    │    END      │           │
                    └─────────────┘
```

*FIG. 15A*

P

100

r (x, y, θ)

Y
X

*FIG. 15B*

P

Δx

r (x, y, θ)

100

*FIG. 15C*

P

Δx

r (x, y, θ)

100

*FIG. 15D*

P

Δθ

100

r (x, y, θ)

Europäisches
Patentamt

European
Patent Office

Office européen
des brevets

# EUROPEAN SEARCH REPORT

**Application Number**

EP 25 22 6645

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/066453 A1 (SNEYDERS YURI [BE] ET AL) 3 March 2022 (2022-03-03) | 1-4,9-15 | INV. B62D6/00 A01B69/04 B62D15/02 |
| A | * paragraphs [0008], [0031] - [0033], [0052] - [0055], [0059], [0077], [0083] - [0086], [0090]; claims 1-6; figures 1-10 * | 5-8 | |
| X | WO 2020/193129 A1 (ZAHNRADFABRIK FRIEDRICHSHAFEN [DE]) 1 October 2020 (2020-10-01) * page 1, paragraph 1 * * page 8, paragraph 2 - page 9, paragraph 3; examples 1-8 * | 1,13-15 | |
| X | EP 4 026 744 A1 (HITACHI ASTEMO LTD [JP]) 13 July 2022 (2022-07-13) | 1,2, 10-15 | |
| A | * paragraphs [0039] - [0044]; claims 1-3 * | 3-9 | |

**TECHNICAL FIELDS SEARCHED (IPC)**

B62D
A01B

The present search report has been drawn up for all claims

| Place of search | Date of completion of the search | Examiner |
|---|---|---|
| The Hague | 24 April 2026 | Janusch, Stefan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
............................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 22 6645

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2026

| Patent document cited in search report | | Publication date | Patent family member(s) | Publication date |
|---|---|---|---|---|
| US 2022066453 A1 | | 03-03-2022 | AU 2021338375 A1 | 11-05-2023 |
| | | | AU 2024227099 A1 | 24-10-2024 |
| | | | BR 112023004016 A2 | 04-04-2023 |
| | | | CA 3191222 A1 | 10-03-2022 |
| | | | EP 4211017 A1 | 19-07-2023 |
| | | | US 2022066453 A1 | 03-03-2022 |
| | | | US 2025044798 A1 | 06-02-2025 |
| | | | WO 2022051625 A1 | 10-03-2022 |
| WO 2020193129 A1 | | 01-10-2020 | DE 102019204255 A1 | 01-10-2020 |
| | | | WO 2020193129 A1 | 01-10-2020 |
| EP 4026744 A1 | | 13-07-2022 | EP 4026744 A1 | 13-07-2022 |
| | | | JP WO2021044811 A1 | 11-03-2021 |
| | | | WO 2021044811 A1 | 11-03-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024231929 A

- US 11572074 B